# FASCICULE DE BREVET EUROPEEN

(11) **EP 1 352 360 B1**
(45) Date de publication et mention de la délivrance du brevet: **04.10.2006**
(21) Numéro de dépôt: 01995779.4
(22) Date de dépôt: 21.12.2001
(51) Int. Cl.: G06K 19/073

(54) **PROCEDE DE PROTECTION CONTRE LES ATTAQUES PAR MESURE DE COURANT OU DE RAYONNEMENT ELECTROMAGNETIQUE**
VERFAHREN ZUM SCHUTZ VOR ENERGIEANALYSE- ODER ELEKTROMAGNETISCHEN STRAHLUNGSANALYSEATTACKEN
METHOD FOR PROTECTION AGAINST POWER ANALYSIS OR ELECTROMAGNETIC RADIATION ANALYSIS ATTACKS

(30) Priorité: 29.12.2000 FR 0017269
(43) Date de publication de la demande: 15.10.2003
(73) Titulaire: GEMPLUS, 13420 Gémenos (FR)
(72) Inventeur: TYMEN, Christophe, F-78000 Versailles (FR)
(86) Numéro de dépôt international: PCT/FR2001/004179
(87) Numéro de publication internationale: WO 2002/054342

(56) Documents cités:
- WO-A-00/10287
- HELMUT SCHERZER: "Smart card operating system. Potential risks and security countermeasures" CONFERENCE PROCEEDINGS, 16 novembre 1999 (1999-11-16), XP002178269 Paris

## Description

L'invention concerne un procédé algorithmique non déterministe d'inversion d'un élément dans un corps fini de caractéristique deux. Plus généralement, l'invention concerne également un procédé de protection contre les attaques par mesure de courant ou par mesure de rayonnement électromagnétique contre des dispositifs électroniques utilisant des algorithmes effectuant des calculs dans des corps finis de caractéristique deux.

Par la suite, on notera GF (2^n) un corps fini de caractéristique 2, n étant un nombre entier. Les opérations dans GF(2^n) jouent un rôle important en cryptographie, à cause des systèmes cryptographiques basés sur des corps finis. En particulier, l'inversion dans un corps fini, c'est-à-dire l'opération qui à un élément x de GF(2^n) fait correspondre 1/x, est un procédé crucial, du fait qu'il est coûteux en calcul, et peut donc engendrer des variations de temps importantes au cours de l'exécution d'algorithmes cryptographiques. L'algorithme d'inversion dans GF(2^n) le plus efficace connu à ce jour est dit « algorithme du quasi-inverse », et procède comme suit. Cet algorithme est décrit dans la publication « Fast key exchange elliptic curve systems » les auteurs étant R. Schroeppel, H. Orman et O. Spatscheck présentée à la conférence Crypto en 1995 qui a eu lieu à Santa Barbara, Californie, Etats-Unis d'Amérique.
On introduit quelques notations :
- on note GF(2) [X] l'anneau des coefficients des polynômes à coefficient binaires;
- tous les éléments de GF(2^n) sont représentés par des polynômes en la variable x de degré plus petit que n ;
- on note M(X) le polynôme irréductible à coefficients 0 ou 1,
   appartenant à GF(2) [X], définissant le corps GF(2^n) ;
- si U et V sont des variables d'un algorithme, U<->V signifie qu'on échange les valeurs de U et de V. De plus U<-u signifie qu'on affecte la valeur u à la variable U ;
- enfin, si A est un élément de GF (2^n), on définit le degré de A, noté « deg A», comme le degré de sa représentation polynomiale ; en outre, si A=a_0+a_1x+...+a_(n-1) x^(n-1) est un élément de GF(2^n), on dit que A est pair si a_0=0 ; enfin, on appelle terme de degré k de A la formulation a_k.
L'algorithme du quasi-inverse se présente de la façon suivante dénommé ci-après « Algorithme 1 », avec une entrée définie, une sortie définie et des étapes d'exécution :
Entrée : A, qui est un élément de GF(2) [X] de degré strictement plus petit que n et non nul, et M qui est aussi un élément de GF(2) [X] de degré strictement plus petit que n et non nul ;
Sortie : un élément B de GF(2) [X] tel que AB(X)=X_k [M(X)] avec k < 2 deg M, l'expression [M(X)] signifiant modulo M de X ;
L'étape 1 consiste en une étape d'initialisation qui consiste à affecter des valeurs à k, B, C, F, G, ce qu'on représente par la formulation suivante : k<-0,B<-1, C<-0, F<-A, G<-M ;
Etape 2 : Tant que F est pair, exécuter F<-F/X, C<-C*X, k<-k+1 ;
Etape 3 : Si F=1, aller à l'étape 7 ;
Etape 4 : Si deg(F)<deg(G), exécuter un F<->G et B<-> ;
Etape 5 : F<-F+G, B<-B+C ;
Etape 6 : Aller à l'étape 2 ;
Etape 7 : Retourner B.

Cet algorithme permet par la suite de calculer l'inverse de A(x) dans GF(2^n) en divisant B(x) par x^k.

Cet algorithme est déterministe, dans le sens où son exécution reste identique si son entrée ne change pas. Cette propriété est un inconvénient, du fait d'attaques possibles par mesure de courant ou de rayonnement, qui parviennent à obtenir une trace de l'exécution de l'algorithme, et peuvent, par des raisonnements statistiques et par des tests d'hypothèse, obtenir des informations sur l'entrée et la sortie de l'algorithme.

Aujourd'hui, on ne connaît pas de procédé pour calculer des inverses dans GF(2^n) en introduisant un caractère aléatoire dans l'exécution du procédé de calcul.

La présente invention consiste à combler cette absence et concerne un procédé algorithmique permettant de calculer l'inverse de tout élément dans GF(2^n) de sorte que l'exécution de cet algorithme soit toujours différente même si l'entrée fournie à l'algorithme reste identique.

Ainsi, une analyse statistique par test d'hypothèse appliquée à cet algorithme échoue du fait du caractère aléatoire de l'exécution.

L'invention fournit un moyen simple de mise en oeuvre c'est-à-dire facile à faire ou exécuter. Par ailleurs, un second avantage sur la souplesse d'exécution apparaît : en général quand on introduit un aléa dans un algorithme, le temps d'exécution de l'algorithme est augmenté. L'invention permet de moduler de manière très souple l'augmentation du temps d'exécution.
L'invention est un procédé algorithmique dérivé de l'algorithme 1, et est détaillée dans l'algorithme 2 présentant un paramètre choisi, une entrée définie, une sortie définie et des étapes d'exécution :
Paramètre 1 choisi : un entier 1 >=0 qui permet de contrôler le degré de hasard introduit dans l'algorithme ainsi que le surcroît du temps d'exécution ;
Entrée : A, polynôme élément non nul de GF(2) [X] de degré strictement plus petit que n ;
Sortie : B, polynôme élément de GF(2) [X] tel que AB (X)=X_k [M (X)] avec k < 2(degM+1), l'expression [M(X)] signifiant modulo M de X ;
Etape 1 : Tirer un polynôme aléatoire R dans GF(2) [X] de degré égal à 1, premier avec le polynôme A, et dont le terme de degré 0 est non nul. Ceci peut être obtenu itérativement, en répétant l'opération, jusqu'à ce qu'un R satisfaisant soit obtenu ;
Etape 2 : U<-M*R, U élément non nul de GF(2) [X] de degré strictement plus petit que n ;
Etape 3 : Initialisation qui consiste à affecter des valeurs à k, B, C, F, G, ce qu'on représente par la formulation suivante : k<-0,B<-1,C<-0,F<-A, G<-M ;
Etape 4 : Tant que F est pair, exécuter F<-F/X, C<-C*X, k<-k+1 ;
Etape 5 : Si F=1, aller à l'étape 10 ;
Etape 6 : Si deg(F)<deg(G), exécuter F<->G et B<->C ;
Etape 7 : F<-F+G, B<-B+C
Etape 8 : Aller à l'étape 5 ;
Etape 9 : Retourner B.

Le procédé de l'invention est donc caractérisé en ce que l'algorithme d'inversion utilise un polynôme multiple de M(X) à la place de M(X) pour faire des calculs modulaires dans l'anneau GF(2) [X]. En effet, le produit (M*R) est introduit pour remplacer (M) dans l'algorithme de l'art antérieur. Cet algorithme est donc non déterministe car son exécution change constamment du fait de la multiplication de M par R.

L'invention peut être utilisée dans tout procédé cryptographique utilisant des calculs dans les corps finis de caractéristique 2..En particulier, l'invention peut être utilisée dans tous les procédés cryptographiques basés sur le logarithme discret, à la fois dans les corps de caractéristique 2 et dans les courbes elliptiques. En particulier, l'invention peut être utilisée dans tous les procédés cryptographiques susceptibles d'utiliser des calculs dans des courbes elliptiques, hyperelliptiques et superelliptiques définies sur des corps finis de caractéristique 2, et en particulier les courbes de Koblitz. Ces schémas incluent en particulier l'algorithme de signature ECDSA, et l'algorithme d'échange de clés ECDH.

Ces applications énoncées ci-dessus dans le cadre de la cryptographie ne sont pas exhaustives et peuvent s'appliquer à d'autres domaines technologiques comme par exemple le domaine des codes correcteurs.

Par ailleurs, l'invention concerne également des dispositifs électroniques mettant en oeuvre le procédé de l'invention.

Plus précisément, les dispositifs électroniques sont des objets portables électroniques comme par exemple une carte à puce.

## Revendications

1. Procédé de protection contre les attaques par mesure de courant ou par mesure de rayonnement électromagnétique dans un dispositif électronique mettant en oeuvre un algorithme effectuant des calculs dans des corps finis de caractéristique deux noté GF(2^n) **caractérisé en ce que** ledit procédé comprend l'utilisation d'un paramètre, d'une entrée et d'une sortie suivantes :
Paramètre 1 choisi : un entier 1 >=0 permettant de contrôler le degré de hasard introduit dans l'algorithme ainsi que le surcroît du temps d'exécution ;
Entrée : A un polynôme élément non nul de GF(2) [X] de degré strictement plus petit que n ;
Sortie : B un polynôme élément de GF(2) [X] tel que AB(X)=X_k[M(X)] avec k < 2 (degM+1) ;
Et **en ce qu'**il comprend les étapes d'exécution suivantes :
Etape 1 : Tirer un polynôme aléatoire R dans GF(2)[X] de degré égal à 1, premier avec le polynôme A, et dont le terme de degré 0 est non nul, ceci pouvant être obtenu itérativement, en répétant l'opération, jusqu'à ce qu'un R satisfaisant soit obtenu ;
Etape 2 : calculer : U<-M*R, U élément non nul de GF(2)[X] de degré strictement plus petit que n ;
Etape 3 : Initialiser en affectant des valeurs à k, B, C, F, G, ce qu'on représente par la formulation suivante : k<-0,B<-1,C<-0,F<-A, G<-M ;
Etape 4 : réaliser la comparaison : tant que F est pair, exécuter F<-F/X, C<-C*X, k<-k+1 ;
Etape 5 : Si F=1, aller à l'étape 9 ;
Etape 6 : Si deg(F)<deg(G), exécuter F<->G et B<->C ;
Etape 7 : calculer : F<-F+G, B<-B+C ;
Etape 8 : Aller à l'étape 5 ;
Etape 9 : Retourner B.

2. Dispositif électronique mettant en oeuvre le procédé de protection contre les attaques par mesure de courant ou par mesure de rayonnement selon la revendication 1.

3. Dispositif électronique selon la revendication 2 **caractérisé en ce qu'**il est un objet portable électronique.

4. Dispositif électronique selon la revendication 3 **caractérisé en ce qu'**il est une carte à puce.

## Claims

1. Method of protecting against attacks by measurement of current or by measurement of electromagnetic radiation in an electronic device implementing an algorithm performing calculations in finite fields of characteristic two, referred to as GF(2^n), **characterised in that** said method includes the use of the following parameter, input and output:
Parameter 1 selected: an integer 1 >=0 which makes it possible to control the degree of randomness introduced in the algorithm as well as the increase of the execution time;
Input: A, non-zero polynomial element of GF (2) [X] of degree strictly less than n;
Output: B, polynomial element of GF(2) [X] so that AB(X)=X_k [M(X)] where k < 2 (degM+1);
And **in that** it comprises the following steps of execution:
Step 1: Obtain a random polynomial R in GF(2) [X] of degree equal to 1, prime with the polynomial A, and therefore with degree term 0 other than zero, it being possible to obtain this iteratively, by repeating the operation, until a satisfactory R is obtained;
Step 2: U<-M*R, U non-zero element of GF(2) [X] of degree strictly less than n;
Step 3: Initialisation by allocating values to k, B, C, F, G, which is represented by the following formulation: k<-0, B<-1, C<-0, F<-A, G<-M;
Step 4: make the comparison: as long as F is even, execute F<-F/X, C<-C*X, k<-k+1;
Step 5: If F=1, go to step 9;
Step 6: If deg(F)<deg(G), execute F<->G and B<->C;
Step 7: F<-F+G, B<-B+C
Step 8: Go to step 5;
Step 9: Return B.

2. Electronic device implementing the method of protecting against attacks by measurement of current or by measurement of radiation according to claim 1.

3. Electronic device according to claim 2, **characterised in that** it is a portable electronic object.

4. Electronic device according to claim 3, **characterised in that** it is a chip card.

## Patentansprüche

1. Verfahren zum Schutz vor Angriffen durch Strommessung oder durch Messung elektromagnetischer Strahlung in einer elektronischen Vorrichtung, bei dem ein Berechnungen in fertigen Körpern mit dem Merkmal zwei, bezeichnet mit GF(2^n), durchführender Algorithmus umgesetzt wird, **dadurch gekennzeichnet, dass** das genante Verfahren den Einsatz eines Parameters, eines Eingangs und eines Ausgangs wie folgt umfasst:
Ausgewählter Parameter 1: eine ganze Zahl 1 > = 0, die die Kontrolle des in den Algorithmus eingeführten Zufallsgrads sowie der Zunahme der Ausführungszeit erlaubt;
Eingang: A, ein Polynomelement ungleich Null von GF(2) [X] mit einem strikt kleineren Grad als n;
Ausgang: B, ein Polynomelement von GF (2) [X] wie z. B. AB (X) = X_k [M (X)] mit k < 2 (degM+1);
Und dass es die folgenden Ausführungsschritte umfasst:
Stufe 1: Ein zufälliges Polynom R in GF (2) [X] mit einem Grad von gleich 1 ziehen, das Erste mit dem Polynom A, und dessen Ausdruck des Grades 0 ungleich Null ist, das durch Wiederholung der Operation, bis ein zufrieden stellendes R erhalten wird, iterativ erhalten werden kann;
Stufe 2: Berechnen: U<M*R, wobei U ein Element ungleich Null von GF (2) [X] mit einem strikt kleineren Grad als n ist;
Stufe 3: Initialisierung durch Zuordnen der Werte zu k, B, C, F, G, was durch die folgende Formel dargestellt wird: k<-0, B<-1, C<-0, F<-A, G<-M;
Stufe 4: Herstellung des Vergleichs: solange F geradzahlig ist, Ausführen von F<-F/X, C<-C*K, k<-k+1;
Stufe 5: Wenn F=1, zur Stufe 9 übergehen;
Stufe 6: Wenn deg(F)<deg(G), Ausführen von F<->G und B<->C;
Stufe 7: Berechnen: F<-F+G, B<-B+C;
Stufe 8: Übergehen zur Stufe 5;
Stufe 9: Zurückkehren zu B.

2. Das Verfahren zum Schutz vor Angriffen durch Strommessung oder durch Strahlung gemäß Anspruch 1 umsetzende elektronische Vorrichtung.

3. Elektronische Vorrichtung gemäß Anspruch 2, **dadurch gekennzeichnet, dass** sie ein tragbarer elektronischer Gegenstand ist.

4. Elektronische Vorrichtung gemäß Anspruch 3, **dadurch gekennzeichnet, dass** sie eine Chipkarte ist.
